# EUROPÄISCHE PATENTSCHRIFT

(11) **EP 2 631 810 B1**
(45) Veröffentlichungstag und Bekanntmachung des Hinweises auf die Patenterteilung: **14.01.2015**
(21) Anmeldenummer: 12156861.2
(22) Anmeldetag: 24.02.2012
(51) Int. Cl.: G06F 13/42, G06F 13/40

(54) **Verfahren zur Vergabe von Teilnehmeradressen und modulares Peripheriesystem der Automatisierungstechnik**
Method for allocating participant addresses and modular periphery system for automation technology
Procédé d'attribution d'adresses de participants et système périphérique modulaire de la technique d'automatisation

(43) Veröffentlichungstag der Anmeldung: 28.08.2013
(73) Patentinhaber: Siemens Aktiengesellschaft, 80333 München (DE)
(72) Erfinder: Wasmuth, Ulrich, 92224 Amberg (DE)

(56) Entgegenhaltungen:
- DE-A1- 10 233 978
- US-B1- 6 745 270

## Beschreibung

Die Erfindung betrifft ein Verfahren zur Vergabe von Teilnehmeradressen an Teilnehmer in einem modularen Peripheriesystem der Automatisierungstechnik, wobei das Peripheriesystem eine Steuerbaugruppe und mehrere Teilnehmer umfasst, dabei werden die Teilnehmer derart mit der Steuerbaugruppe verbunden, dass ein erster Teilnehmer an die Steuerbaugruppe angeschlossen wird und weitere Teilnehmer verkettet über den ersten Teilnehmer bzw. über einen jeweiligen Vorgängerteilnehmer an die Steuerbaugruppe angeschlossen werden, wobei die Steuerbaugruppe einen Startpunkt für eine Linienstruktur der verkettet verschalteten Teilnehmer bildet, wobei die Linienstruktur einen ersten Längszweig und einen zweiten Längszweig umfasst und in einem Teilnehmer ein erstes Schaltmittel im ersten Längszweig und ein zweites Schaltmittel im zweiten Längszweig zunächst geöffnet und zu einem späteren Zeitpunkt zum Schlie-βen eines verketteten Kommunikationspfads betrieben wird.

In einem Automatisierungssystem kommuniziert beispielsweise ein Busmaster mit verschiedenen Peripheriebaugruppen, welche jeweils als ein Slave parametriert sein können, über ein Bussystem. Die Peripheriebaugruppen können beispielsweise Digitaleingaben, Digitalausgaben, Analog-Ein-/Ausgaben sein. Der Busmaster kann als ein Automatisierungsgerät in Form einer speicherprogrammierbaren Steuerung oder als ein Interfacemodul, welches eine Schnittstelle zwischen einer speicherprogrammierbaren Steuerung und den Peripheriebaugruppen darstellt, meist als dezentrale Peripherie bezeichnet, ausgeführt sein. Um eine Kommunikation zwischen dem Busmaster und den Peripheriebaugruppen zu ermöglichen, erhalten die Peripheriebaugruppen eine eindeutige Adresse.

Nach der Profinet-Norm ist beispielsweise eine automatische Adressvergabe auf Basis einer durch ein Link Layer Discovery Protokoll ermittelten Topologie möglich. Jedoch ist es bei diesen Verfahren von Nachteil, dass eine weltweit eindeutige Port Mac-Adresse für jeden Port einer Peripheriebaugruppe fest einprogrammiert sein muss.

Weiterhin ist es von Nachteil, dass beispielsweise bei einem modular aufgebauten Peripheriesystem einzelne Teilnehmer über einen Rückwandbus kommunikationstechnisch miteinander verbunden sind und über diesen Rückwandbus eine Linietopologie gebildet ist, welches nur eine Linienstruktur zulässt.

In der US 6 745 270 B1 ist ebenfalls eine Linienstruktur eines Bussystems offenbart, insbesondere wird hier ein Inter Integrated Circuit Bus beschrieben.

Die DE 102 33 978 A1 offenbart ein Bussystem, wobei eine Master-Einheit, eingesetzt als eine Steuerbaugruppe, Identifier und damit Adressen an in Reihe geschaltete Slave-Einheiten sendet.

Es ist daher die Aufgabe der Erfindung, ein Verfahren zur Vergabe von Teilnehmeradressen an Teilnehmer in einen modularen Peripheriesystem der Automatisierungstechnik bereitzustellen, welches es ermöglicht, eine Linienstruktur auf eine Baumstruktur zu erweitern.

Für das eingangs genannte Verfahren wird die Aufgabe dadurch gelöst, dass für ein Erweitern der Linienstruktur zu einer Baumstruktur ein Anschaltelement in den verketteten Kommunikationspfad geschaltet wird, wobei das Anschaltelement den ersten Längszweig durch verbindet und den zweiten Längszweig derart auftrennt, dass ein Anschalten eines weiteren Teilnehmers für eine weitere untergeordnete Linienstruktur an das Anschaltelement möglich wird, wobei zur Adressierung ausgehend von der Steuerbaugruppe eine Adressanfrage gesendet wird, wobei in Abhängigkeit einer Antwortnachricht der Teilnehmer und mittels eines ersten Schaltbefehls und eines zweiten Schaltbefehls ein in den Teilnehmern angeordnetes drittes Schaltmittel und ein viertes Schaltmittel über die Schaltbefehle derart gesteuert werden, dass bei vorhandenem Anschaltelement zunächst die Teilnehmer in der untergeordneten Linienstruktur adressiert werden, wobei das dritte Schaltelement in einem ersten Querzweig derart betrieben wird, dass in einem Anfangszustand das dritte Schaltelement Antwortnachrichten an die Steuerbaugruppe selektiert und durchlässt, wobei das vierte Schaltmittel in einem zweiten Querzweig derart betrieben wird, dass für den Fall, dass auf eine Adressanfrage in einer vorgegebenen Zeit keine Antwortnachricht erfolgt, der zweite Querzweig geschlossen wird und damit zum Einen das Ende der jeweiligen an das Anschaltelement angeschlossenen untergeordneten Linien markiert und zum Anderen ein neuer Kommunikationsweg für Adressanfragen an die weiteren Teilnehmer in den übergeordneten Linien geschaltet wird.

Mit dieser Lösung hat man ein automatisches Adressierungsverfahren in einer erweiterten Rückwandbustopologie erzielt. Damit die Teilnehmer in einer Baumstruktur bzw. Baumtopologie verschaltet werden können ist zum Einen ein zusätzliches Stück Hardware, wie das Anschaltelement, insbesondere als ein T-Stück ausgebildet, notwendig und zum Anderen sind die Teilnehmer derart weitergebildet, dass sie neben den bereits bekannten ersten und zweiten Schaltmittel noch weitere Schaltmittel, nämlich ein drittes Schaltmittel und ein viertes Schaltmittel aufweisen. Über Steuerkommandos wie z.B. Schaltbefehle, kann die Steuerbaugruppe, welche in der Regel als ein Busmaster ausgestaltet ist, die Schaltmittel in den Teilnehmern je nach Verfahrensschritt in definierte Stellungen bringen.

Bei beispielsweise einer dezentralen Peripheriebaugruppe, wobei die einzelnen Teilnehmer der dezentralen Peripherie über einen Rückwandbus an einen Busmaster angekoppelt sind, ist es jetzt möglich diese Rückwandbustopologie, welche zuvor nur eine Linien- oder Strangtopologie darstellte, auf eine erweiterte Rückwandbustopologie in Richtung einer Baumstruktur bzw. Baumtopologie zu erweitern.

Dies ist von Vorteil, da die Teilnehmer in dem ersten Längszweig und dem zweiten Längszweig derart verschaltet sind, dass immer ein Kommunikationspfad zurück zu der Steuerbaugruppe gewährleistet sein sollte. Das bedeutet; ist z.B. an der Steuerbaugruppe ein erster Teilnehmer angeschlossen und zwischen dem ersten Teilnehmer und einem dritten Teilnehmer ein Anschalteelement angeschlossen, an welchen wiederum ein zweiter Teilnehmer angeschlossen ist, so sind der zweite und dritte Teilnehmer Nachfolgeteilnehmer von dem ersten Teilnehmer. Hat der erste Teilnehmer bereits erfolgreich eine Adresse erhalten und die Längszweige mit seinem ersten und zweiten Schaltmittel durchgeschaltet, so kann über das Anschalteelement eine Adressanfrage an den zweiten Teilnehmer gesendet werden. Erhält der zweite Teilnehmer nach einer Adressanfrage auch eine gültige Adresse und will er dies mit einer positiven Antwortnachricht quittieren, so würde die Antwortnachricht von dem zweiten Teilnehmer über das Anschalteelement in den dritten Teilnehmer und von dem dritten Teilnehmer wieder zurück über das Anschalteelement über den ersten Teilnehmer zu der Steuerbaugruppe gelangen. Für diesen Signalweg in dem aufgezeigten Kommunikationspfad ist es sinnvoll, dass das dritte Schaltmittel im ersten Querzweig derart betrieben wird, dass diese positive Antwort, welche an die Steuerbaugruppe gerichtet ist, durchgelassen wird.

Die automatische Adressvergabe wird weiter vereinfacht, wenn ausgehend von der Steuerbaugruppe die Adressanfrage als ein Kommunikationstelegramm über ein durch die Längszweige gebildetes Bussystem gesendet wird, wobei die Adressanfrage als Anfrageparameter eine Standardadresse und eine zu vergebene Adresse aufweist, wobei weiterhin in dem Teilnehmer über eine Empfangseinheit geprüft wird, ob ein in ihm hinterlegter Adresswert mit der Standardadresse übereinstimmt und für den Fall einer Übereinstimmung, der hinterlegte Adresswert auf die zu vergebene Adresse geändert wird.

Bei einer erfolgreichen Adressvergabe wird der Teilnehmer über eine Sendeeinheit ein Antwortnachricht für die Steuerbaugruppe generieren und diese an die Steuerbaugruppe zurücksenden, wobei die Steuerbaugruppe derart betrieben wird, dass sie bei einer positiven Antwortnachricht des Teilnehmers einen ersten Schaltbefehl zu dem Teilnehmer sendet, wobei der Teilnehmer derart betrieben wird, dass durch den ersten Schaltbefehl das erste Schaltmittel und das zweite Schaltmittel in einem geschlossenen Zustand betrieben werden und das dritte Schaltmittel in einem geöffneten Zustand betrieben wird.

Da für das automatisiert ablaufende Verfahren der Adressvergabe noch nicht bekannt ist, welche Ausdehnung die untergeordnete Linienstruktur aufweist, wird nach erfolgreicher Adressvergabe die Steuerbaugruppe erneut einer Adressanfrage an die weiteren Teilnehmer senden und für den Fall, dass auf eine Adressanfrage in einer vorgegebenen Zeit keine Antwortnachricht erfolgt, wird ein zweiter Schaltbefehl durch die Steuerbaugruppe abgesetzt, wobei ein einzelner Teilnehmer dazu ausgestaltet ist aufgrund des zweiten Schaltbefehls den zweiten Querzweig mit dem vierten Schaltmittel zu schließen, wodurch zum Einen das Ende der jeweiligen an das Anschaltelement angeschlossenen untergeordneten Linie markiert wird und zum Anderen ein neuer Kommunikationsweg für Adressanfragen an die weiteren Teilnehmer in der übergeordneten Linie geschaltet wird.

Vorteilhafter Weise wird in der Steuerbaugruppe ein Überwachungsmittel derart betrieben, dass die Kommunikation der Teilnehmer über den Kommunikationspfad überwacht wird und frü den Fall, dass ein Teilnehmer in einer vergebenen Zeit kein Lebenszeichen sendet, alle Teilnehmer in einen Anfangszustand zurückgesetzt werden.

Weiterhin ist es für eine sichere Kommunikation von Vorteil, wenn in einem einzelnen Teilnehmer ein Teilnehmerüberwachungsmittel zum Zurücksetzen eines einzelnen Teilnehmers betrieben wird.

Die eingangs genannte Aufgabe wird ebenfalls durch ein modulares Peripheriesystem der Automatisierungstechnik umfassend eine Steuerbaugruppe und mehrere Teilnehmer gelöst, wobei das modulare Peripheriesystem mit dem zuvor genannten Verfahren betrieben wird.

Vorrichtungsgemäß umfasst das modulare Peripheriesystem der Automatisierungstechnik eine Steuerbaugruppe und mehrere Teilnehmer, wobei ein erster Teilnehmer mit der Steuerbaugruppe in Verbindung steht und weitere Teilnehmer verkettet über den ersten Teilnehmer bzw. über einen jeweiligen Vorgängerteilnehmer an die Steuerbaugruppe angeschlossen sind, dabei bildet die Steuerbaugruppe einen Startpunkt für eine Linienstruktur der verkettet verschalteten Teilnehmer, die Linienstruktur weist einen ersten Längszweig und einen zweiten Längszweig auf, in einem Teilnehmer ist jeweils ein erstes Schaltmittel im ersten Längszweig und ein zweites Schaltmittel im zweiten Längszweig angeordnet, wobei die Steuereinheit dazu ausgestaltet ist, einen ersten Schaltbefehl abzusetzen, wobei der jeweilige Teilnehmer dazu ausgestaltet ist mittels des ersten Schaltbefehls das erste Schaltmittel und das zweite Schaltmittel von einem geöffneten Zustand in einen geschlossenen Zustand zu versetzen, wodurch ein Schließen eines verketteten Kommunikationspfades erreicht wird, für ein Erweitern der Linienstruktur zu einer Baumstruktur ist in dem Anschaltmittel ein Kommunikationspfad angeordnet, wobei das Anschaltelement ausgestaltet ist den ersten Längszweig durch zu verbinden und den zweiten Längszweig aufzutrennen und es ist ein weiterer Teilnehmer für eine weitere untergeordnete Linienstruktur an das Anschaltelement angeschlossen, die Steuerbaugruppe ist dabei zur Adressierung der Teilnehmer ausgestaltet eine Adressanfrage zu senden und weiterhin ist sie dazu ausgestaltet abhängig von einer Antwortnachricht der Teilnehmer ein in den Teilnehmern angeordnetes drittes Schaltmittel über den ersten Schaltbefehl und ein viertes Schaltmittel über einen zweiten Schaltbefehl derart zu steuern, dass zunächst die Teilnehmer in der untergeordneten Linienstruktur adressiert werden.

Durch eine Ausgestaltung der Steuerbaugruppe zum Steuern der in den Teilnehmern angeordneten Schaltmittel, wobei die Schaltmittel auch als Kommunikationspfadschalter bezeichnet werden können, ist es nun möglich eine automatische Adressierung für ein modulares Peripheriesystem vorzunehmen, wobei eine Kommunikationstopologie vorteilhafter Weise auf eine Baumstruktur, abweichend von der zuvor herrschenden Linienstruktur, erweitert wird. Dies bedeutet, ein Anwender in der Automatisierungstechnik erhält eine erhöhte Flexibilität bei einer Verdrahtung von Peripherieteilnehmern, wobei Kabellängen und somit Kosten und Gewicht eingespart werden können.

Im Vergleich zu einer Lösung, wie sie bei einem Profinet mit eingesetzten Link Layer Discovery Protokoll angewendet wird, ist diese Lösung kostengünstiger, da für den Aufbau der Baumstruktur passive Komponenten verwendet werden können und nicht kostenintensive Switch-Geräte eingesetzt werden müssen. Zudem müssen keine eindeutigen IP-Adressen in den jeweiligen Teilnehmer bzw. in das Peripheriegerät einprogrammiert werden.

Das dritte Schaltelement ist dabei in einem ersten Querzweig angeordnet und ausgestaltet in einem Anfangszustand Antwortnachrichten an die Steuerbaugruppe zu selektieren und durchzulassen, wobei sich der Anfangszustand auf einen Zeitpunkt vor einer Vergabe einer Adresse für einen Teilnehmer bezieht.

Weiterhin ist das vierte Schaltmittel in einem zweiten Querzweig angeordnet und die Steuerbaugruppe ausgestaltet für den Fall, dass auf eine Adressanfrage in einer vorgegebenen Zeit keine Antwortnachricht erfolgt, den zweiten Schaltbefehl abzusetzen, wobei ein einzelner Teilnehmer dazu ausgestaltet ist aufgrund des zweiten Schaltbefehls den zweiten Querzweig mit dem vierten Schaltmittel zu schließen, wodurch zum Einen ein Ende der jeweiligen an das Anschaltelement angeschlossenen untergeordneten Linie markiert wird und zum Anderen ein neuer Kommunikationsweg für Adressanfragen an die weiteren Teilnehmer in der übergeordneten Linie geschaltet wird.

Um das Adressierverfahren weiter zu vereinfachen ist die Steuerbaugruppe ausgestaltet die Adressanfrage als ein Kommunikationstelegramm über ein durch die Längszweige gebildetes Bussystem zu senden, wobei die Adressanfrage als Anfrageparameter eine Standardadresse und ein zu vergebende Adresse aufweist, wobei weiterhin in dem Teilnehmer eine Empfangseinheit angeordnet ist, mit welcher geprüft wird, ob ein in ihm hinterlegter Adresswert mit der Standardadresse übereinstimmt und für den Fall einer Übereinstimmung, der hinterlegte Adresswert auf die zu vergebene Adresse geändert wird.

In einer weiteren Ausgestaltung des modularen Peripheriesystems ist in jeweils einem Teilnehmer eine Sendeeinheit angeordnet, wobei bei erfolgreicher Adressvergabe, der Teilnehmer über die Sendeeinheit Antwortnachricht für die Steuerbaugruppe generiert und diese an die Steuerbaugruppe zurücksendet, wobei die Steuerbaugruppe derart ausgestaltet ist, dass sie bei einer positiven Antwortnachricht des Teilnehmers den ersten Schaltbefehl zu dem Teilnehmer sendet, wobei der Teilnehmer derart betrieben wird, dass durch den ersten Schaltbefehl das erste Schaltmittel und das zweite Schaltmittel in einem geschlossenem Zustand betrieben werden und das dritte Schaltmittel in einem geöffneten Zustand betrieben wird. In der Steuerbaugruppe ist ein Überwachungsmittel angeordnet und ausgestaltet die Kommunikation zu überwachen und bei einem Kommunikationsfehler einen Rücksetzschaltbefehl zum Zurücksetzen der Teilnehmer in einen Defaultzustand zu senden.

Weiterhin kann ein Teilnehmer ein eigenes Teilnehmerüberwachungsmittel zum Zurücksetzen von sich selber aufweisen.

Die Zeichnung gibt ein mögliches Ausführungsbeispiel des modularen Peripheriesystems der Automatisierungstechnik und des zugehörigen Verfahrens wieder. Es zeigen
- FIG 1: ein modulares Peripheriesystem mit Teilnehmern in einer erweiterten Rückwandbustopologie in einem Defaultzustand,
- FIG 2: einen Programmablaufplan für das Verfahren zur automatischen Adressvergabe und
- FIG 3: das modulare Peripheriesystem aus FIG 1 nach einer abgeschlossenen Adressvergabe.

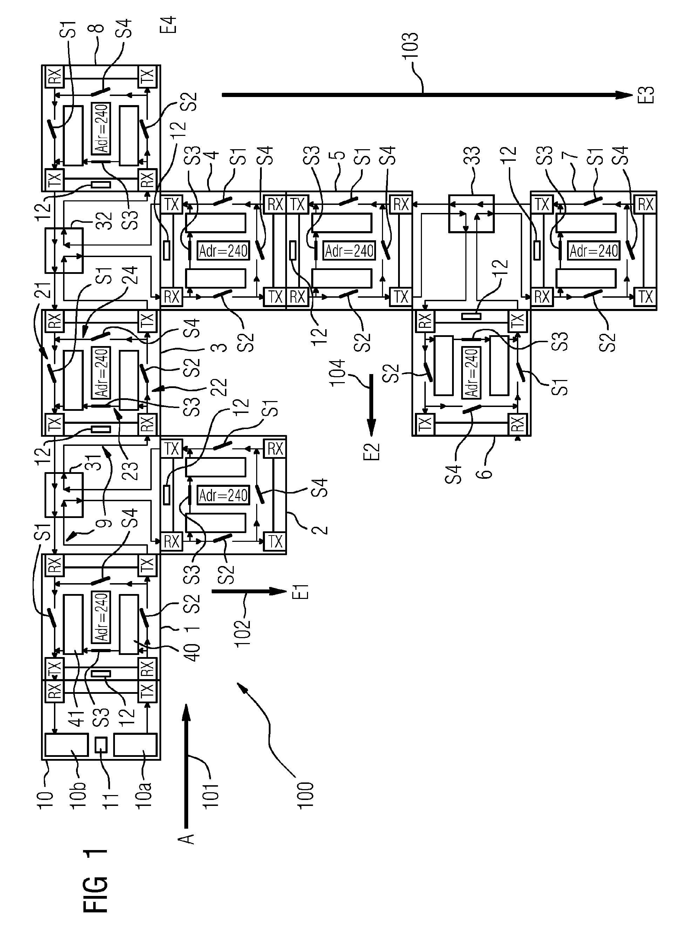

Gemäß FIG 1 ist ein modulares Peripheriesystem 100 der Automatisierungstechnik, umfassend eine Steuerbaugruppe 10 und mehrere Teilnehmer 1,...,8 dargestellt. An die Steuerbaugruppe 10 ist ein erster Teilnehmer 1 derart direkt angeschlossen, dass ein TX-Sendeport der Steuerbaugruppe 10 mit einem RX-Empfangsport des ersten Teilnehmers 1 verbunden ist und weiterhin ein RX-Empfangsport der Steuerbaugruppe 10 mit einem TX-Sendeport des ersten Teilnehmers 1 verbunden ist. Die Steuerbaugruppe 10 bildet für eine Linienstruktur 101, welche als eine Hauptlinienstruktur bezeichnet werden kann, einen Startpunkt A. Ausgehend von diesem Startpunkt A sind die Teilnehmer 1,...,8 verkettet an die Steuerbaugruppe 10 verschaltet. Da mit dieser Vorrichtung die Möglichkeit geschaffen wird von einer herkömmlichen Linienstruktur abzuweichen und beispielsweise eine Rückwandbustopologie auf eine Baumtopologie zu erweitern, bilden gemäß FIG 1 ein erster Teilnehmer 1, ein dritter Teilnehmer 3 und ein achter Teilnehmer 8 die Linienstruktur 101 (Hauptstruktur oder übergeordnete Linienstruktur).

Durch die Anordnung eines ersten Anschaltelementes 31 zwischen dem ersten Teilnehmer 1 und dem dritten Teilnehmer 3 kann ein zweiter Teilnehmer 2 an die übergeordnete Linienstruktur 101 angeschaltet werden und dadurch kann über den zweiten Teilnehmer 2 eine untergeordnete Linienstruktur 102 gebildet werden.

Das erste Anschaltelement 31 ist als ein T-Stück ausgebildet und kann beispielsweise als eine Baugruppe ausgestaltet sein, welche auf einen bestehenden sich längs erstreckenden Rückwandbus eines Automatisierungsgerätes aufgesteckt wird. Dazu weist das erste Anschaltelement 31 im Wesentlichen drei Anschlusspunkte auf. An einem ersten Anschlusspunkt wird der erste Längszweig 21 und der zweite Längszweig 22 eines vorhergehenden Teilnehmers aufgenommen, an einem zweiten Anschlusspunkt wird der erste Längszweig 21 und der zweite Längszweig 22 an einen nachfolgenden Teilnehmer der übergeordneten Linienstruktur 101 weitergegeben und mit einem dritten Anschlusspunkt ist die Möglichkeit geschaffen worden den zweiten Teilnehmer 2 in die übergeordnete Linienstruktur 101 einzuschleifen, wobei der zweite Teilnehmer 2 für sich wiederum eine untergeordnete Linienstruktur 102 bildet.

Für ein Erweitern der übergeordneten Linienstruktur 101 zu einer Baumstruktur ist demnach zwischen dem ersten Teilnehmer 1 und den dritten Teilnehmer 3 das erste Anschaltelement 31 angeordnet und ausgestaltet den ersten Längszweig 21 durch zu verbinden und den zweiten Längszweig 22 aufzutrennen, wodurch der zweite Teilnehmer 2 eine weitere untergeordnete Linienstruktur 102 bilden kann.

Ähnlich wie das erste Anschaltelement 31 ist ein zweites Anschaltelement 32 zwischen dem dritten Teilnehmer 3 und einem achten Teilnehmer 8 angeordnet. Das zweite Anschaltelement 32 sorgt dafür, dass zwischen dem dritten Teilnehmer 3 und dem achten Teilnehmer 8 wiederum die übergeordnete Linienstruktur 101 aufgebrochen wird und über ein an das zweite Anschaltelement 32 angeschlossenen vierten Teilnehmer 4 wird eine weitere untergeordnete Linienstruktur 103 eröffnet. In Längsrichtung der erweiterten Linienstruktur 103 ist der vierte Teilnehmer 4 der Vorgängerteilnehmer zu einem nachfolgenden fünften Teilnehmer 5, wobei die erweiterte Linienstruktur 103 mit einem siebten Teilnehmer 7 abgeschlossen ist.

Um die bereits vorherrschende Baumstruktur nochmals zu erweitern ist zwischen dem fünften Teilnehmer 5 und dem siebten Teilnehmer 7 ein drittes Anschaltelement 33 angeordnet. Das dritte Anschaltelement 33 ermöglicht den Aufbau einer nochmals untergeordneten Linienstruktur 104. Diese untergeordnete Linienstruktur 104 weist einen sechsten Teilnehmer 6 auf.

Ausgehend von der Steuerbaugruppe 10, welche den Startpunkt A bildet, bildet der zweite Teilnehmer 2 in der untergeordneten Linienstruktur 102 ein erstes Ende E1, der sechste Teilnehmer 6 in der untergeordneten Linienstruktur 104 ein zweites Ende E2, der siebte Teilnehmer 7 in der untergeordneten Linienstruktur 103 ein drittes Ende E3 und letztendlich bildet der achte Teilnehmer 8 in der übergeordneten Linienstruktur 101 ein viertes Ende E4, der von einer herkömmlichen Linienstruktur zu einer Baumstruktur erweiterten Rückwandbustopologie.

Der erste Teilnehmer 1 bis achte Teilnehmer 8 sind identisch aufgebaut. Jeder Teilnehmer weist ein erstes Schaltmittel S1, ein zweites Schaltmittel S2, ein drittes Schaltmittel S3 und ein viertes Schaltmittel S4 auf. Das erste Schaltmittel S1 ist in dem ersten Längszweig 21 und das zweite Schaltmittel S2 ist in dem zweiten Längszweig 22 angeordnet. Das dritte Schaltmittel S3 ist in einem ersten Querzweig 23 und das vierte Schaltmittel S4 ist in einem zweiten Querzweig 24 angeordnet. Jeder Teilnehmer 1,...,8 weist eingangsseitig und ausgangsseitig je einen TX-Sendeport und je einen RX-Empfangsport auf. Das erste Schaltmittel S1 verbindet den eingangsseitigen TX-Sendeport mit dem ausgangsseitig angeordneten RX-Empfangsport und das zweite Schaltmittel S2 verbindet den eingangsseitig angeordneten RX-Empfangsport mit dem ausgangsseitig angeordneten TX-Sendeport. Durch diese wechselseitige Anschaltung des TX-Sendeports einer Vorgängerbaugruppe mit dem RX-Empfangsport einer Nachfolgebaugruppe bzw. der Anschaltung des RX-Empfangsports einer Vorgängerbaugruppe an den XSendeport einer Nachfolgebaugruppe wird ein verketteter Kommunikationspfad durch die gesamte Bustopologie des modularen Peripheriesystems 100 gebildet.

Zum Senden von Schaltbefehlen, wie z.B. einem ersten Schaltbefehl und einem zweiten Schaltbefehl, weist die Steuerbaugruppe 10 einen Sender 10a und einen Empfänger 10b auf. Der Sender 10a ist mit einem TX-Sendeport der Steuerbaugruppe 10 verbunden und kann somit, über die zuvor beschriebene Verkettung, Schaltbefehle in das Peripheriesystem 100 senden. Der Empfänger 10b ist an einem RX-Empfangsport der Steuerbaugruppe 10 angeschlossen und kann somit ebenfalls über die zuvor genannte Verkettung Antwortnachrichten von den Teilnehmern 1,..., 8 empfangen.

Zum Senden von einem Rücksetzschaltbefehl weist die Steuerbaugruppe 10 ein Überwachungsmittel 11 auf. Zusätzlich weisen die Teilnehmer 1,...,8 jeder ein Teilnehmerüberwachungsmittel 12 auf, womit sich die Teilnehmer 1,...,8 zusätzlich selber Zurücksetzen können, wobei das Teilnehmerüberwachungsmittel 12 derart ausgestaltet ist, dass nach einer erfolgreichen Adressvergabe die Kommunikation zu diesem Teilnehmer überwacht wird und wenn er innerhalb einer vergebenen Zeit keine Anfragen mehr erhält, der Teilnehmer sich selbst zurücksetzt.

Die Teilnehmer 1,...,8 weisen ihrerseits wiederum eine Empfangseinheit 40 und eine Sendeeinheit 41 auf.

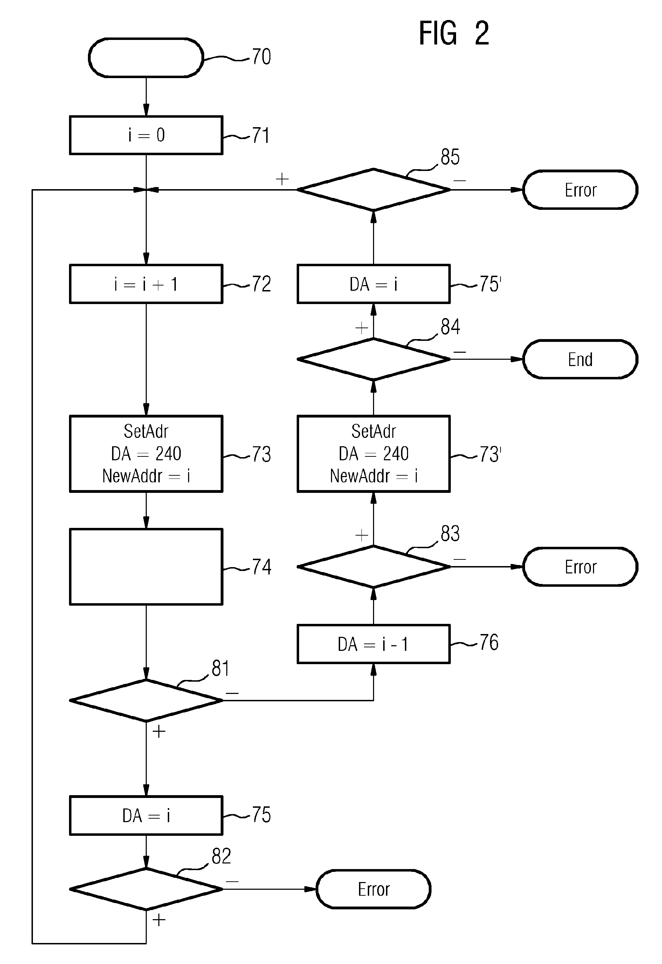

Gemäß FIG 2 ist ein Programmablaufplan für eine automatische Adressierung des modularen Peripheriesystems 100 dargestellt. Für die Beschreibung der automatischen Adressierung werden im Folgenden die FIG 2 und die FIG 1 gleichzeitig betrachtet.

Ausgehend von einem Programmstart 70 des Programmablaufplans wird zunächst ein Initialisierungsschritt 71 durchlaufen, in welchem eine Teilnehmeradresse i initialisiert wird und mit einem Startwert i = 0 belegt wird. Anschließend folgt ein Inkrementierungsschritt 71 in dem die zu vergebene Teilnehmeradresse i um eins erhöht wird. Mit einer darauf folgenden Adressanfrage 73, dargestellt durch einen programmtechnischen Befehl SetAdr; DA = 240,; NewAdr = i, wird ausgehend von der Steuerbaugruppe 10 (siehe FIG 2) die Adressanfrage 73 abgesetzt.

Die Steuerbaugruppe 10 ist dazu ausgestaltet die Adressanfrage 73 als ein Kommunikationstelegramm über ein durch die Längszweige 21,22 gebildetes Bussystem zu senden, wobei die Adressanfrage 73 als Anfrageparameter eine Standardadresse 240 und die zu vergebene Adresse i aufweist. Die gesendete Adressanfrage 73 gelangt in den ersten Teilnehmer 1. In diesem ersten Schritt befindet sich der erste Teilnehmer 1 in einem Anfangszustand, da er noch keine gültige Adresse zugeteilt bekommen hat. In diesem Anfangszustand sind das erste Schaltmittel S1 und das zweite Schaltmittel S2 geöffnet, so dass der erste Längszweig 21 und der zweite Längszweig 22 zu den nachfolgenden Teilnehmern 2,...,8 aufgetrennt ist.

Der RX-Empfangsport des ersten Teilnehmers 1 ist mit der Empfangseinheit 40 verbunden. Zwischen der Empfangseinheit 40 und der Sendeeinheit 41 ist in dem ersten Querzweig 23 das dritte Schaltmittel S3 angeordnet. Zwar ist das dritte Schaltmittel S3 geschlossen, es ist aber derart ausgestaltet, dass es Antwortnachrichten 74 an die Steuerbaugruppe 10 selektiert und auch nur diese zur Steuerbaugruppe 10 durchlässt. Das bedeutet, dass die Adressanfrage 73 in der Empfangseinheit 40 ausgewertet wird, wobei in der Empfangseinheit 40 geprüft wird, ob ein in dem Teilnehmer hinterlegter Adresswert mit der Standardadresse 240 übereinstimmt. Für den Fall einer Übereinstimmung wird der hinterlegte Adresswert auf die zu vergebene Adresse i geändert. Da in dem Adressspeicher Adr des ersten Teilnehmers der Adresswert auf 240 stand, hat nach der Adressanfrage der Steuerbaugruppe 10, der erste Teilnehmer 1 nun die Adresse i = 1.

Gemäß dem Programmablaufplan nach FIG 2 sendet nun der erste Teilnehmer 1 über seine Sendeeinheit 41 eine Antwortnachricht 74, welche er für die Steuerbaugruppe 10 generiert hat.

Nach dem Senden der Antwortnachricht 74 ist der Programmablauf in der Steuerbaugruppe 10 zu betrachten, hierzu weist der Programmablaufplan eine erste Verzweigungsstelle 81 auf. Die Verzweigungsstelle 81 wertet eine positive Rückmeldung + oder eine negative Rückmeldung - aus und verzweigt bei einer positiven Rückmeldung + zu einer Aktion 75 für einen ersten Schaltbefehl und bei einer negativen Rückmeldung - zu einer Aktion 76 für einen zweiten Schaltbefehl.

Da die Adressvergabe erfolgreich war wird eine positive Rückmeldung vom ersten Teilnehmer 1 zurückgesendet und von der Steuerbaugruppe 10 wird die Aktion 75 für den ersten Schaltbefehl ausgeführt. Die Steuerbaugruppe 10 ist dazu ausgestaltet den ersten Schaltbefehl abzusetzen, wobei wiederum der jeweilige Teilnehmer in diesem Fall der erste Teilnehmer 1 dazu ausgestaltet ist, mittels des ersten Schaltbefehls das erste Schaltmittel S1 und das zweite Schaltmittel S2 von einem geöffneten Zustand in einen geschlossenen Zustand zu versetzen, wodurch ein Schließen des verketteten Kommunikationspfades erreicht wird.

Die Aktion 75 für den ersten Schaltbefehl S1 wird ebenfalls auf eine positive + oder negative - Rückmeldung geprüft. Im Falle einer negativen Rückmeldung wird der Programmablauf durch eine Fehlermeldung gestoppt. Bei solch einem Stopp aufgrund einer Fehlermeldung wird in der Steuerbaugruppe 10 ein Rücksetzschaltbefehl abgesetzt, welcher alle Teilnehmer 1,...,8 in einen definierten Anfangszustand zurücksetzt. Im Falle einer positiven + Rückmeldung wird der Programmablaufplan mit dem Inkrementierungsschritt 72 fortgesetzt.

Das bedeutet, die Teilnehmeradresse i wird um eins erhöht und hat nunmehr den Wert i = 2. Mit dieser neuen Teilnehmeradresse i = 2 wird eine erneute Adressanfrage 73 gesendet. Da nun im ersten Teilnehmer 1 die Schaltmittel S1 bzw. S2 den ersten Längszweig 21 bzw. den zweiten Längszweig 22 durchgeschaltet haben, kann die Adressanfrage 73 über die Verschaltung mit dem ersten Anschaltelement 31 in den zweiten Teilnehmer 2 gelangen. Da in dem zweiten Teilnehmer 2 das dritte Schaltmittel S3 nur Nachrichten durchlässt, bei welchen als Empfänger die Steuerbaugruppe 10 definiert ist, läuft diese Adressanfrage 73 in die Empfangseinheit 40 des zweiten Teilnehmers 2 und kann hier wiederum die Standardadresse 240 auf den neuen Wert i = 2 setzen. Die Sendeeinheit 41 meldet mit dem Programmschritt Antwortnachricht 74 eine positive Rückmeldung an die Steuereinheit 10 zurück. Da diese Antwortnachricht nun als Adressat die Steuereinheit 10 aufweist, kann diese Antwortnachricht über den TX-Sendeport des zweiten Teilnehmers 2 in das erste Anschaltelement 31 gelangen und von dem ersten Anschaltelement 31 in den RX-Empfangsport des dritten Teilnehmers 3 über sein drittes Schaltmittel S3 über seine Sendeeinheit 41 an seinen TX-Sendeport wieder über das erste Anschaltmittel 31 zurück zur Steuerbaugruppe 10 gelangen.

Da wiederum eine positive Rückmeldung an die Steuerbaugruppe 10 gemeldet wurde, wird dies in der ersten Verzweigungsstelle 81 wieder so gewertet, dass die Aktion 75 für den ersten Schaltbefehl ausgeführt wird. Die Aktion 75 für den ersten Schaltbefehl hat jetzt als zu schaltenden Teilnehmer die gültige Destinationadresse DA = i. Somit sendet die Steuerbaugruppe 10 den ersten Schaltbefehl zum zweiten Teilnehmer 2, welches zur Folge hat, dass das erste Schaltmittel S1 und das zweite Schaltmittel S2 des zweiten Teilnehmers 2 in einem geschlossenen Zustand betrieben werden und das dritte Schaltmittel S3 in einem geöffneten Zustand betrieben wird.

Auch diese Schaltaktion wird positiv an die Steuerbaugruppe 10 zurückgemeldet woraufhin die Teilnehmeradresse i in dem Inkrementierungsschritt 72 auf i = 3 erhöht wird. Es wird mit der Adressanfrage 73 eine erneute Adressanfrage mit der Standardadresse 240 und der Teilnehmeradresse i = 3 versendet. Da aber der zweite Teilnehmer 2 in der untergeordneten Linienstruktur 102 ein erstes Ende E1 bildet und sein viertes Schaltmittel S4 noch nicht geschlossen ist, läuft diese Anfrage ins Leere. Es wird ein Time-Out produziert, welches bedeutet, dass in dem Programmablaufplan gemäß FIG 2 eine negative Rückmeldung diagnostiziert wird und es folgt eine Aktion 76 für einen zweiten Schaltbefehl S2.

In Vorbereitung für diesen zweiten Schaltbefehl S2 wird die Teilnehmeradresse i oder die Destinationadresse DA um eins reduziert und hat somit wieder den Wert der Teilnehmeradresse i = 2.

Mit der Zieladresse i = 2 kann nun der zweite Teilnehmer 2 mit dem zweiten Schaltbefehl S2 gezielt angesprochen werden. Demzufolge setzt die Steuerbaugruppe 10 den zweiten Schaltbefehl S2 ab, wobei der zweite Teilnehmer 2 dazu ausgestaltet ist, aufgrund des zweiten Schaltbefehls den zweiten Querzweig 24 mit dem vierten Schaltmittel S4 zu schließen, wodurch zum Einen das erste Ende E1 der untergeordneten Linie 102 markiert wird und zum Anderen ein neuer Kommunikationsweg für weitere Adressanfragen 73 an die weiteren Teilnehmer 3,...,8 geschaltet wird.

Ist die Aktion 76 für den zweiten Schaltbefehl erfolgreich verlaufen, wird in einer dritten Verzweigungsstelle 83 dieser Erfolg geprüft. Bei einem positiven Ergebnis + gelangt der Programmablaufplan zu einer weiteren Adressanfrage 73' andererseits endet das Programm mit einer Fehlermeldung.

Die weitere Adressanfrage 73' ist im Wesentlichen so aufgebaut wie die andere Adressanfrage 73. Mit dieser Adressanfrage wird der dritte Teilnehmer 3 erreicht. Über eine vierte Verzweigungsstelle 84 wird die Adressvergabe an den dritten Teilnehmer 3 geprüft und bei erfolgreicher Adressvergabe wird für die Teilnehmeradresse i = 3 eine weitere Aktion 75' für wiederum den ersten Schaltbefehl abgesetzt, welche dazu führt das im dritten Teilnehmer 3 das erste Schaltmittel S1 und das zweite Schaltmittel S2 geschlossen werden. Wird auch dies mit positivem Ergebnis + zurückgemeldet, so wird der Programmablauf gemäß FIG 2 wieder mit dem Inkrementierungsschritt 72 fortgesetzt.

Gemäß dem Programmablaufplan werden die restlichen Teilnehmer 4,...,8 entsprechend über die weiteren zweiten und dritten Anschaltelemente 32,33 mit einer Adresse versorgt.

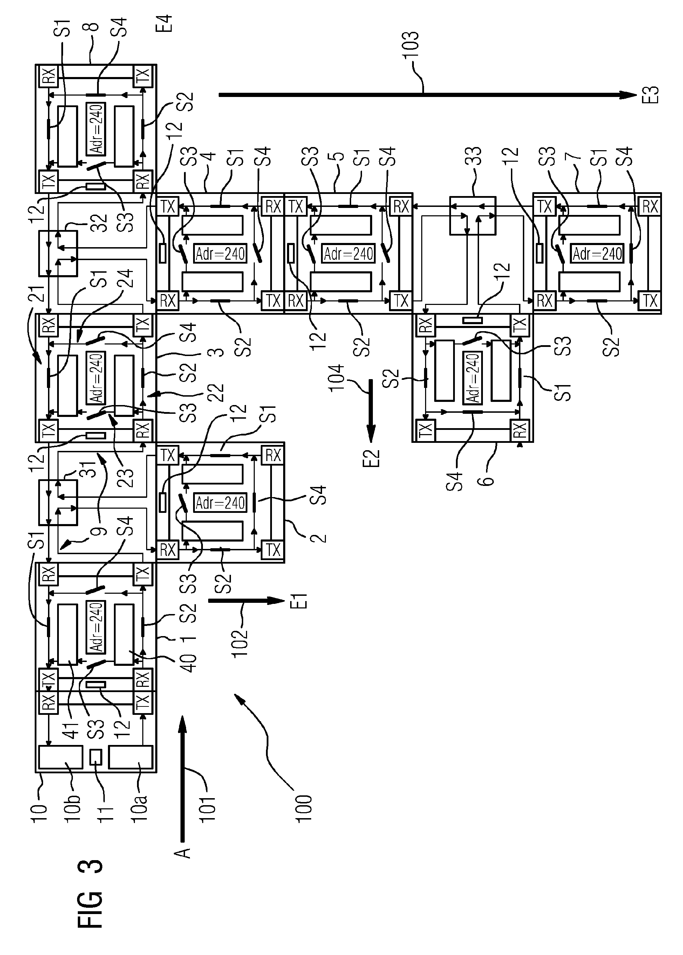

Nach vollständigem Durchlaufen des Programms hat jeder der Teilnehmer 1,...,8 eine eindeutige Adresse erhalten und das Ergebnis der Adressvergabe, sowie die Schalterstellung der Schaltmittel S1,...,S4 ist mit der FIG 3 dargestellt.

## Patentansprüche

1. Verfahren zur Vergabe von Teilnehmeradressen (i) an Teilnehmer (1,...,8) in einem modularen Peripheriesystem (100) der Automatisierungstechnik, wobei das Peripheriesystem (100) eine Steuerbaugruppe (10) und mehrere Teilnehmer (1,...,8) umfasst, dabei werden die Teilnehmer (1,...,8) derart mit der Steuerbaugruppe (10) verbunden, dass ein erster Teilnehmer (1) an die Steuerbaugruppe (10) angeschlossen wird und weitere Teilnehmer (2,...,8) verkettet über den ersten Teilnehmer (1) beziehungsweise über einen jeweiligen Vorgängerteilnehmer an die Steuerbaugruppe (10) angeschlossen werden, wobei die Steuerbaugruppe (10) einen Startpunkt (A) für eine Linienstruktur der verkettet verschalteten Teilnehmer (1,...,8) bildet, wobei die Linienstruktur einen ersten Längszweig (21) und einen zweiten Längszweig (22) umfasst und in einem Teilnehmer (1,...,8) ein erstes Schaltmittel (S1) im ersten Längszweig (21) und ein zweites Schaltmittel (S2) im zweiten Längszweig (22) zunächst geöffnet und zu einem späteren Zeitpunkt zum Schließen eines verketteten Kommunikationspfads betrieben wird,
**dadurch gekennzeichnet, dass** für ein Erweitern der Linienstruktur zu einer Baumstruktur ein Anschaltelement (31) in den verketteten Kommunikationspfad geschaltet wird, wobei das Anschaltelement (31) den ersten Längszweig (21) durch verbindet und den zweiten Längszweig (22) derart auftrennt, dass ein Anschalten eines weiteren Teilnehmers (2) für eine weitere untergeordnete Linienstruktur (102) an das Anschaltelement (31) möglich wird, wobei zur Adressierung ausgehend von der Steuerbaugruppe (10) eine Adressanfrage (73) gesendet wird wobei in Abhängigkeit einer Antwortnachricht (74) der Teilnehmer (1,...,8) und mittels eines ersten Schaltbefehls und eines zweiten Schaltbefehls ein in den Teilnehmern angeordnetes drittes Schaltmittel (S3) und ein viertes Schaltmittel (S4) über die Schaltbefehle derart gesteuert werden, dass bei vorhandenem Anschaltelement (31) zunächst die Teilnehmer (2) in der untergeordneten Linienstruktur (102) adressiert werden, wobei das dritte Schaltmittel (S3) in einem ersten Querzweig (23) derart betrieben wird, dass in einem Anfangszustand das dritte Schaltelement (S3) Antwortnachrichten an die Steuerbaugruppe (10) selektiert und durchlässt, wobei das vierte Schaltmittel (S4) in einem zweiten Querzweig (24) derart betrieben wird, dass für den Fall, dass auf eine Adressanfrage (73) in einer vorgegebenen Zeit keine Antwortnachricht (74) erfolgt, der zweite Querzweig (24) geschlossen wird und damit
- zum einen das Ende (E1,E2,E3) der jeweiligen an das Anschaltelement (31,32,33) angeschlossenen untergeordneten Linie (102,103) markiert wird und
- zum anderen ein neuer Kommunikationsweg für Adressanfragen (73) an die weiteren Teilnehmer in der übergeordneten Linie (101) geschaltet wird.

2. Verfahren nach Anspruch 1, wobei ausgehend von der Steuerbaugruppe (10) die Adressanfrage (73) als ein Kommunikationstelegramm über ein durch die Längszweige (21,22) gebildetes Bussystem gesendet wird , wobei die Adressanfrage (73) als Anfrageparameter eine Standardadresse (240) und eine zu vergebende Adresse (i) aufweist, wobei weiterhin in dem Teilnehmer (1,...,8) über eine Empfangseinheit (40) geprüft wird, ob ein in ihm hinterlegter Adresswert mit der Standardadresse (240) übereinstimmt und
- für den Fall einer Übereinstimmung, der hinterlegte Adresswert auf die zu vergebende Adresse (i) geändert wird.

3. Verfahren nach Anspruch 2, wobei bei erfolgreicher Adressvergabe, der Teilnehmer (1,...,8) über eine Sendeeinheit (41) eine Antwortnachricht (74) für die Steuerbaugruppe (10) generiert und diese an die Steuerbaugruppe (10) zurück sendet, wobei die Steuerbaugruppe (10) derart betrieben wird, dass sie
- bei einer positiven Antwortnachricht (74) des Teilnehmers (1,...,8) einen ersten Schaltbefehl zu dem Teilnehmer (1,...,8) sendet, wobei der Teilnehmer (1,...,8) derart betrieben wird, dass durch den ersten Schaltbefehl das erste Schaltmittel (S1) und das zweite Schaltmittel (S2) in einem geschlossenem Zustand betrieben werden und das dritte Schaltmittel (S3) in einem geöffneten Zustand betrieben wird.

4. Verfahren nach Anspruch 3, wobei nach erfolgreicher Adressvergabe die Steuerbaugruppe (10) erneut eine Adressanfrage (73) an die weiteren Teilnehmer (1,...,8) sendet und für den Fall, dass auf eine Adressanfrage (73) in einer vorgegebenen Zeit keine Antwortnachricht (74) erfolgt, ein zweiter Schaltbefehl durch die Steuerbaugruppe (10) abgesetzt wird, wobei ein einzelner Teilnehmer (1,...,8) dazu ausgestaltet ist aufgrund des zweiten Schaltbefehls den zweiten Querzweig (24) mit dem vierten Schaltmittel (S4) zu schließen, wodurch
- zum einen das Ende der jeweiligen an das Anschaltelement (31,32,33) angeschlossenen untergeordneten Linie (102,103) markiert wird und
- zum anderen ein neuer Kommunikationsweg für Adressanfragen (73) an die weiteren Teilnehmer (1,...,8) in der übergeordneten Linie (101) geschaltet wird.

5. Verfahren nach einem der Ansprüche 1 bis 4, wobei in der Steuerbaugruppe (10) ein Überwachungsmittel (11) derart betrieben wird, dass die Kommunikation der Teilnehmer (1,...,8) über den Kommunikationspfad überwacht wird und für den Fall, dass ein Teilnehmer in einer vorgegebenen Zeit kein Lebenszeichen sendet, alle Teilnehmer (1,...,8) in einen Anfangszustand zurückgesetzt werden.

6. Verfahren nach einem der Ansprüche 1 bis 5, wobei in einem Teilnehmer (1,...,8) ein Teilnehmerüberwachungsmittel (12) zum Zurücksetzen eines einzelnen Teilnehmers (1,...,8) betrieben wird.

7. Modulares Peripheriesystem (100) der Automatisierungstechnik, umfassend eine Steuerbaugruppe (10) und mehrere Teilnehmer (1,...,8), wobei ein erster Teilnehmer (1) mit der Steuerbaugruppe (10) in Verbindung steht und weitere Teilnehmer (2,...,8) verkettet über den ersten Teilnehmer (1) beziehungsweise über einen jeweiligen Vorgängerteilnehmer an die Steuerbaugruppe (10) angeschlossen sind, dabei bildet die Steuerbaugruppe (10) einen Startpunkt (A) für eine Linienstruktur (101) der verkettet verschalteten Teilnehmer (1,...,8), die Linienstruktur (101) weist einen ersten Längszweig (21) und einen zweiten Längszweig (22) auf, in einem Teilnehmer (1,...,8) ist jeweils ein erstes Schaltmittel (S1) im ersten Längszweig (21) und ein zweites Schaltmittel (S2) im zweiten Längszweig (22) angeordnet, wobei die Steuerbaugruppe (10) dazu ausgestaltet ist einen ersten Schaltbefehl abzusetzen, wobei der jeweilige Teilnehmer (1,...,8) dazu ausgestaltet ist mittels des ersten Schaltbefehls das erste Schaltmittel (S1) und das zweite Schaltmittel (S2) von einem geöffneten Zustand in einen geschlossenen Zustand zu versetzen, wodurch ein Schließen eines verketteten Kommunikationspfades erreicht wird, **dadurch gekennzeichnet, dass** für ein Erweitern der Linienstruktur (101) zu einer Baumstruktur ein Anschaltelement (31) in dem verketteten Kommunikationspfad angeordnet ist, das Anschaltelement (31) ausgestaltet ist den ersten Längszweig (21) durch zu verbinden und den zweiten Längszweig (22) aufzutrennen und ein weiterer Teilnehmer (2) für eine weitere untergeordnete Linienstruktur (102) an das Anschaltelement (31) angeschlossen ist, die Steuerbaugruppe (10) ist zur Adressierung der Teilnehmer (1,...,8) ausgestaltet eine Adressanfrage (73) zu senden und weiterhin ausgestaltet abhängig von einer Antwortnachricht (74) der Teilnehmer (1,...,8) ein in den Teilnehmern (1,...,8) angeordnetes drittes Schaltmittel (S3) über den ersten Schaltbefehl und ein viertes Schaltmittel (S4) über einen zweiten Schaltbefehl derart zu steuern, dass zunächst die Teilnehmer (2) in der untergeordneten Linienstruktur (102) adressiert werden, wobei das dritte Schaltmittel (S3) in einem ersten Querzweig (23) angeordnet ist und ausgestaltet ist in einem Anfangszustand Antwortnachrichten (74) an die Steuerbaugruppe (10) zu selektieren und durch zu lassen, wobei sich der Anfangszustand auf einen Zeitpunkt vor einer Vergabe einer Adresse (i) für einen Teilnehmer (1,...,8) bezieht, wobei das vierte Schaltmittel (S4) in einem zweiten Querzweig (24) angeordnet ist und die Steuerbaugruppe (10) ausgestaltet ist für den Fall, dass auf eine Adressanfrage (73) in einer vorgegebenen Zeit keine Antwortnachricht (74) erfolgt, den zweiten Schaltbefehl abzusetzen, wobei ein einzelner Teilnehmer (1,...,8) dazu ausgestaltet ist aufgrund des zweiten Schaltbefehls den zweiten Querzweig (24) mit dem vierten Schaltmittel (S4) zu schließen, wodurch
- zum einen ein Ende (E1,E2,E3) der jeweiligen an das Anschaltelement (31,32,33) angeschlossenen untergeordneten Linie (102,103) markiert wird und
- zum anderen ein neuer Kommunikationsweg für Adressanfragen (73) an die weiteren Teilnehmer in der übergeordneten Linie (101) geschaltet wird.

8. Modulares Peripheriesystem (100) nach Anspruch 7, wobei die Steuerbaugruppe (10) ausgestaltet ist die Adressanfrage (73) als ein Kommunikationstelegramm über ein durch die Längszweige (21,22) gebildetes Bussystem zu senden, wobei die Adressanfrage (73) als Anfrageparameter eine Standardadresse (240) und eine zu vergebende Adresse (i) aufweist, wobei weiterhin in dem Teilnehmer (1,...,8) eine Empfangseinheit (40) angeordnet ist, mit welcher geprüft wird, ob ein in ihm hinterlegter Adresswert mit der Standardadresse (240) übereinstimmt und
- für den Fall einer Übereinstimmung, der hinterlegte Adresswert auf die zu vergebende Adresse (i) geändert wird.

9. Modulares Peripheriesystem (100) nach Anspruch 8, wobei weiterhin in dem Teilnehmer (1,...,8) eine Sendeeinheit (41) angeordnet ist, wobei bei erfolgreicher Adressvergabe, der Teilnehmer (1,...,8) über die Sendeeinheit (41) eine Antwortnachricht (74) für die Steuerbaugruppe (10) generiert und diese an die Steuerbaugruppe (10) zurück sendet, wobei die Steuerbaugruppe (10) derart ausgestaltet ist, dass sie
- bei einer positiven Antwortnachricht (74) des Teilnehmers (1,...,8) den ersten Schaltbefehl zu dem Teilnehmer (1,...,8) sendet, wobei der Teilnehmer (1,...,8) derart betrieben wird, dass durch den ersten Schaltbefehl das erste Schaltmittel (S1) und das zweite Schaltmittel (S2) in einem geschlossenem Zustand betrieben werden und das dritte Schaltmittel (S3) in einem geöffneten Zustand betrieben wird.

10. Modulares Peripheriesystem (100) nach einem der Ansprüche 7 bis 9, wobei in der Steuerbaugruppe (10) ein Überwachungsmittel (11) angeordnet ist, welches ausgestaltet ist die Kommunikation der Teilnehmer über den Kommunikationspfad zu Überwachen und im Falle eines Kommunikationsfehlers einen Rücksetzschaltbefehl zum Zurücksetzen der Teilnehmer (1,...,8) in einen Anfangszustand an die Teilnehmer 1,...,8) zu senden.

11. Modulares Peripheriesystem (100) nach einem der Ansprüche 7 bis 10, wobei ein Teilnehmer (1,...,8) ein Teilnehmerüberwachungsmittel zum Zurücksetzen eines einzelnen Teilnehmers (1,..., 8) aufweist.

## Claims

1. Method for allocating participant addresses (i) to participants (1, ..., 8) in a modular periphery system (100) of automation technology, wherein the periphery system (100) comprises a control module (10) and a number of participants (1, ..., 8), the participants (1, ..., 8) being connected to the control module (10) in this system such that a first participant (1) is connected to the control module (10) and further participants (2,...,8) are connected chained via the first participant (1) or via a respective predecessor participant to the control module (10), wherein the control module (10) forms a starting point (A) for a line structure of the participants (1,...,8) connected in a chain, wherein the line structure comprises a first longitudinal branch (21) and a second longitudinal branch (22) and in a first participant (1,...,8) a first switching means (S1) in the first longitudinal branch (21) and a second switching means (S2) in the second longitudinal branch (22) is first opened and is operated at a later time for closing a chained communication path, **characterised in that**, for an expansion of the line structure to a tree structure, a connection element (31) is switched into the chained communication path, wherein the connection element (31) connects the first longitudinal branch (21) through and disconnects the second longitudinal branch (22) such that connection of a further participant (2) for a further subordinate line structure (102) to the connection element (31) becomes possible, wherein for addressing, starting from the control module (10), an address request (73) is sent, wherein as a function of a response message (74) the participant (1,...,8) and by means of a first switching command and a second switching command, a third switching means (S3) disposed in the participants and a fourth switching means (S4) are controlled via the switching commands such that, if the connection element (31) is present, initially the participants (2) in the subordinate line structure (102) are addressed, wherein the third switching means (S3) is operated in a first tie branch (23) such that in an initial state, the first switching element (S3) selects and lets through response messages to the control module (10), wherein the fourth switching means (S4) is operated in a second tie branch (24) such that, in the event of there not being a response message (74) to an address request (73) within a predetermined time, the second tie branch (24) is closed and thus
- on the one hand the end (E1, E2, E3) the respective subordinate line (102, 103) connected to the connection element (31, 32, 33) is marked and
- on the other hand a new communication path for address requests (73) is switched to the further participant in the superordinate line (101).

2. Method according to claim 1 wherein, starting from the control module (10), the address request (73) is sent as a communications telegram over a bus system formed by the longitudinal branches (21, 22), wherein the address request (73) has a standard address (240) as its request parameter and an address to be allocated (i), wherein a check is further made in the participant (1,..., 8) via a receive unit (40) as to whether an address value stored in it matches the standard address (240) and
- in the event of a match, the stored address value is changed to the address to be allocated (i).

3. Method according to claim 2 wherein, on successful address allocation, the participant (1,...,8) generates a response message (74) for the control module (10) via a transmit unit (41) and returns said message to the control module (10), wherein the control module (10) is operated such that,
- for a positive response message (74) of the participant (1,...,8), it sends a first switching command to the participant (1,...,8), wherein the participant (1,...,8) is operated such that, through the first switching command, the first switching means (S1) and the second switching means (S2) are operated in a closed state and the third switching means (S3) is operated in an opened state.

4. Method according to claim 3 wherein, after successful address allocation, the control module (10) again sends an address request (73) to the further participants (1,...,8) and, in the event of there not being any response message (74) to an address request (73) within a predetermined time, a second switching command is issued by the control module (10), wherein an individual participant (1,...,8) is embodied, on the basis of the second switching command, to close the second tie branch (24) with the fourth switching means (S4), by which
- on the one hand the end of the respective subordinate line (102, 103) connected to the switching element (31, 32, 33) is marked and
- on the other hand a new communication path for address requests (73) to the further participants (1,...,8) is switched into the superordinate line (101).

5. Method according to one of claims 1 to 4, wherein a monitoring means (11) is operated in the control module (10) such that the communication of the participants (1,...,8) over the communication path is monitored and, in the event of a participant not sending any sign of life within a predetermined time, all participants (1,...,8) are reset into an initial state.

6. Method according to one of claims 1 to 5, wherein a participant monitoring means (12) for resetting an individual participant (1,...,8) is operated in a participant (1,...,8).

7. Modular periphery system (100) of automation technology, comprising a control module (10) and a number of participants (1,...,8), wherein a first participant (1) is connected to the control module (10) and further participants (2,...,8) are connected to the control module (10) chained via the first participant (1) or via a respective predecessor participant respectively, in which case the control module (10) forms a starting point (A) for a line structure (101) of the chained connected participants (1,...,8), the line structure (101) has a first longitudinal branch (21) and a second longitudinal branch (22), in a participant (1,...,8) a first switching means (S1) is disposed in the first longitudinal branch (21) and a second switching means (S2) is disposed in the second longitudinal branch (22) respectively, wherein the control module (10) is embodied to issue a first switching command, wherein the respective participant (1,...,8) is embodied by means of the first switching command to switch the first switching means (S1) and the second switching means (S2) from an opened state into a closed state, through which a closure of a chained communication path is achieved,
**characterised in that**, for an expansion of the line structure (101) to a tree structure, a connection element (31) is disposed in the chained communication path, the connection element (31) is embodied to through-connect the first longitudinal branch (21) and to disconnect the second longitudinal branch (22) and a further participant (2) for a further subordinate line structure (102) is connected to the connection element (31), for addressing the participants (1,...,8), the control module (10) is embodied to send an address request (73) and is further embodied, depending on a response message (74) of the participants (1,...,8), to control a third switching means (S3) disposed in the participants (1,...,8) via the first switching command and a fourth switching means (S4) via a second switching command such that initially the participants (2) in the subordinate line structure (102) are addressed, wherein the third switching means (S3) is disposed in a first tie branch (23) and is embodied, in an initial state, to select response messages (74) to the control module (10) and let them through, wherein the initial state relates to a time before an allocation of an address (i) for a participant (1,...,8), wherein the fourth switching means (S4) is disposed in a second tie branch (24) and the control module (10) is embodied, in the event of there being no response message (74) in response to an address request (73) within a predetermined time, to issue the second switching command, wherein an individual participant (1,...,8) is embodied, as a result of the second switching command, to close the second tie branch (24) with the fourth switching means (S4), by which
- on one hand an end (E1, E2, E3) of the respective subordinate line (102, 103) connected to the connection element (31, 32, 33) is marked and
- on the other hand a new communication path for address requests (73) is connected to the further participants in the superordinate line (101).

8. Modular periphery system (100) according to claim 7, wherein the control module (10) is embodied to send the address request (73) as a communication telegram over a bus system formed by the longitudinal branches (21, 22), wherein the address request (73) has, as its request parameters, a standard address (240) and an address to be allocated (i), wherein a receive unit (40) with which a check is made as to whether an address values stored in it matches the standard address (240) is further disposed in the participant (1,...,8),
and
- in the event of a match, the stored address value is changed to the address to be allocated (i).

9. Modular periphery system (100) according to claim 8, wherein a transmit unit (41) is further disposed in the participant (1,...,8) wherein, on successful address allocation, the participant (1,...,8) generates a response message (74) for the control module (10) via the transmit unit (41) and sends said message back to the control module (10), wherein the control module (10) is embodied so that,
- for a positive response message (74) of the participant (1,...,8) it sends the first switching command to the participant (1,...,8), wherein the participant (1,...,8) is operated such that, by the first switching command, the first switching means (S1) and the second switching means (S2) are operated in a closed state and the third switching means (S3) is operated in an opened state.

10. Modular periphery system (100) according to one of claims 7 to 9, wherein a monitoring means (11) is disposed in the control module (10), which is embodied to monitor the communication of the participants over the communication path and, in the event of a communication error, to send the participants (1,...,8) a reset switching command for resetting the participants (1,...,8) into an initial state.

11. Modular periphery system (100) according to one of claims 7 to 10, wherein a participant (1,...,8) has a participant monitoring means for resetting an individual participant (1,...,8).

## Revendications

1. Procédé d'attribution d'adresse ( i ) à des participants ( 1, ..., 8 ) dans un système ( 100 ) périphérique modulaire de la technique d'automatisation, le système ( 100 ) périphérique comprenant un module ( 10 ) de commande et plusieurs participants ( 1, ..., 8 ), les participants ( 1, ..., 8 ) étant reliés au module ( 10 ) de commande, de manière à ce qu'un premier participant ( 1 ) soit raccordé au module ( 10 ) de commande et que d'autres participants ( 2, ..., 8 ) soient raccordés, en étant enchaînés par le premier participant ( 1 ) ou par un participant précurseur respectif, au module ( 10 ) de commande, le module ( 10 ) de commande formant un point ( A ) de départ pour une structure en ligne des participants ( 1, ..., 8 ) enchaînés, la structure en ligne comprenant une première branche ( 21 ) longitudinale et une deuxième branche ( 22 ) longitudinale et dans un participant ( 1, ..., 8 ), on ouvre d'abord un premier moyen ( S1 ) de commutation dans la première branche ( 21 ) longitudinale et un deuxième moyen ( S2 ) de commutation dans la deuxième branche ( 22 ) longitudinale et à un instant ultérieur, on les fait fonctionner pour fermer un trajet de communication enchaîné, **caractérisé en ce que**, pour élargir la structure en ligne en une structure arborescente, on monte un élément ( 31 ) de connexion dans le trajet de communication enchaîné, l'élément ( 31 ) de connexion connectant la première branche ( 21 ) longitudinale et coupant la deuxième branche ( 22 ) longitudinale, de manière à rendre possible une connexion d'un autre participant ( 2 ) à l'élément ( 31 ) de connexion pour une autre structure ( 102 ) en ligne subordonnée, dans lequel, pour l'adressage, on envoie, en partant du module ( 10 ) de commande, une demande (73) d'adresse, dans lequel, en fonction d'un message ( 74 ) de réponse, des participants ( 1, ..., 8 ) et au moyen d'une première instruction de commutation et d'une deuxième instruction de commutation, un troisième moyen ( S3 ) de commutation et un quatrième moyen ( S4 ) de commutation, disposés dans les participants, sont commandés par les instructions de commutation, de manière à ce que, si l'élément ( 31 ) de connexion est présent, les participants ( 2 ) dans la structure ( 102 ) en ligne subordonnée sont adressés d'abord, le troisième moyen ( S3 ) de commutation fonctionnant dans une première branche ( 23 ) transversale, de manière à ce que, dans un état initial, le troisième élément ( S3 ) de commutation sélectionne et fait passer des messages de réponse au module ( 10 ) de commande, le quatrième moyen ( S4 ) de commutation fonctionnant dans une deuxième branche ( 24 ) transversale, de manière à ce que, dans le cas où, sur une demande ( 73 ) d'adresse dans un temps donné à l'avance, il n'y a pas de message ( 74 ) de réponse, la deuxième branche ( 24 ) transversale est fermée et ainsi
- d' une part, la fin ( E1, E2, E3 ) de la ligne ( 102, 103 ) subordonnée, respective, raccordée à l'élément ( 31, 32, 33 ) de commutation est marquée et
- d'autre part, une nouvelle voie de communication pour des demandes ( 73 ) d'adresse aux autres participants est branchée dans la ligne ( 101 ) subordonnée.

2. Procédé suivant la revendication 1, dans lequel, à partir du module ( 10 ) de commande, on envoie la demande ( 73 ) d'adresse, sous la forme d'un télégramme de communication, par un système de bus formé dans les branches ( 21, 22 ) longitudinales, la demande ( 73 ) d'adresse ayant comme paramètres de demande une adresse ( 240 ) standard et une adresse (i) à attribuer, dans lequel on contrôle en outre dans le participant (1, ..., 8), par une unité (40) de réception, si une valeur d'adresse qui y est mémorisée coïncide avec l'adresse ( 240 ) standard et
- dans le cas d'une coïncidence, on modifie la valeur d'adresse mémorisée en l'adresse ( i ) à attribuer.

3. Procédé suivant la revendication 2, dans lequel, si l'attribution d'adresse a réussi, le participant ( 1, ..., 8 ) produit par une unité ( 41 ) d'émission un message ( 74 ) de réponse pour le module ( 10 ) de commande et le renvoie au module ( 10 ) de commande, le module ( 10 ) de commande fonctionnant de manière à
- si le message ( 74 ) de réponse du participant ( 1, ..., 8 ) est positif, envoyer une première instruction de commutation au participant ( 1, ..., 8 ), le participant ( 1, ..., 8 ) étant mis en fonctionnement de manière à mettre, par la première instruction de commutation, le premier moyen ( S1 ) de commutation et le deuxième moyen ( S2 ) de commutation dans un état fermé et le troisième moyen ( S3 ) de commutation dans un état ouvert.

4. Procédé suivant la revendication 3, dans lequel, après attribution réussie d'une adresse, le module ( 10 ) de commande envoie à nouveau une demande ( 73 ) d'adresse aux autres participants ( 1, ..., 8 ) et dans le cas où, sur une demande ( 73 ) d'adresse, un message ( 74 ) de réponse n'a pas eu lieu dans un temps donné à l'avance, une deuxième instruction de commutation est transmise par le module ( 10 ) de commande, un participant ( 1, ..., 8 ) individuel étant conformé pour, sur la base de la deuxième instruction de commutation, fermer la deuxième branche ( 24 ) transversale par le quatrième moyen ( S4 ) de commutation, de sorte que
- d'une part, la fin de la ligne ( 102, 103 ) subordonnée, respective, raccordée à l'élément ( 31, 32, 33 ) de commutation est marquée et
- d'autre part, une nouvelle voie de communication, pour des demandes ( 73 ) d'adresse aux autres participants ( 1, ..., 8 ), est branchée dans la ligne ( 101 ) subordonnée.

5. Procédé suivant l'une des revendications 1 à 4, dans lequel, dans le module ( 10 ) de commande, fonctionne un moyen ( 11 ) de contrôle, de manière à contrôler la communication des participants ( 1, ..., 8 ) par le trajet de communication et, dans le cas où un participant n'envoie pas de signe de vie dans un temps donné à l'avance, remettre tous les participants ( 1, ..., 8 ) dans un état initial.

6. Procédé suivant l'une des revendications 1 à 5, dans lequel, dans un participant ( 1, ..., 8 ), un moyen ( 12 ) de contrôle de participants fonctionne pour remettre à l'état initial un participant ( 1, ..., 8 ) individuel.

7. Système ( 100 ) périphérique modulaire de la technique d'automatisation, comprenant un module ( 10 ) de commande et plusieurs participants ( 1, ..., 8 ), dans lequel un premier participant ( 1 ) est en liaison avec le module ( 10 ) de commande et d'autres participants ( 2, ..., 8 ) sont raccordés au module ( 10 ) de commande en étant enchaînés par le premier participant ( 1 ) ou par un participant précédent respectif, le module ( 10 ) de commande formant un point ( A ) initial pour une structure ( 101 ) en ligne des participants ( 1, ..., 8 ) enchaînés, la structure ( 101 ) en ligne ayant une première branche ( 21 ) longitudinale et une deuxième branche ( 22 ) longitudinale, dans un participant ( 1, ..., 8 ) est disposé respectivement un premier moyen ( S1 ) de commutation dans la première branche ( 21 ) longitudinale et un deuxième moyen ( S2 ) de commutation dans la deuxième branche ( 22 ) longitudinale, le module ( 10 ) de commande étant conformé pour transmettre une première instruction de commutation, le participant ( 1, ..., 8 ) respectif étant conformé pour, au moyen de la première instruction de commutation, faire passer le premier moyen ( S1 ) de commutation et le deuxième moyen ( S2 ) de commutation d'un état ouvert à un état fermé, en obtenant ainsi une fermeture d'un trajet de communication enchaîné, **caractérisé en ce que**, pour étendre la structure ( 101 ) en ligne en une structure arborescente, un élément ( 31 ) de connexion est monté dans le trajet de communication enchaîné, l'élément ( 31 ) de connexion est conformé pour relier la première branche ( 21 ) longitudinale et pour couper la deuxième branche ( 22 ) longitudinale, et un autre participant ( 2 ) pour une autre structure ( 102 ) en ligne subordonnée raccordée à l'élément ( 31 ) de connexion, le module ( 10 ) de commande est, pour l'adressage des participants ( 1, ..., 8 ), conformé pour envoyer une demande ( 73 ) d'adresse et conformé en outre pour, en fonction d'un message ( 74 ) de réponse des participants ( 1, ..., 8 ), commander un troisième moyen ( S3 ) de commutation disposé dans les participants ( 1, ...,8 ) par la première instruction de commutation et un quatrième moyen ( S4 ) de commutation par une deuxième instruction de commutation, de manière à ce que les participants ( 2 ), dans la structure ( 102 ) en ligne subordonnée, soit adressés d'abord, le troisième moyen ( S3 ) de commutation étant monté dans une première branche ( 23 ) transversale et conformé pour sélectionner dans un état initial des messages ( 74 ) de réponse au module ( 10 ) de commande et les lui faire passer, l'état initial se rapportant à un instant avant une attribution d'une adresse ( i ) à un participant ( 1, ..., 8 ), le quatrième moyen ( S4 ) de commutation étant monté dans une deuxième branche ( 24 ) transversale et le module ( 10 ) de commande étant conformé pour, dans le cas où dans un temps donné à l'avance, un message ( 74 ) de réponse n'est pas reçu sur une demande ( 73 ) d'adresse, transmettre la deuxième instruction de commutation, un participant ( 1, ..., 8 ) individuel étant conformé pour, sur la base de la deuxième instruction de commutation, fermer la deuxième branche ( 24 ) transversale par le quatrième moyen ( S4 ) de commutation, de sorte que
- d'une part, une fin ex, E2, E3 ) de la ligne ( 102, 103 ) subordonnée, raccordée respectivement à l'élément ( 31, 32, 33 ) de connexion est marquée et
- d'autre part, une nouvelle voie de communication pour des demandes ( 73 ) d'adresse aux autres participants est branchée dans la ligne ( 101 ) subordonnée.

8. Système ( 100 ) périphérique modulaire suivant la revendication 7, dans lequel le module ( 10 ) de commande est conformé pour envoyer la demande ( 73 ) d'adresse sous la forme d'un télégramme de communication par un système de bus formé par les branches ( 21, 22 ) longitudinales, la demande ( 73 ) d'adresse ayant comme paramètres de demande, une adresse ( 240 ) standard et une adresse ( i ) à attribuer, dans lequel en outre il est disposé dans le participant ( 1, ..., 8 ) une unité ( 40 ) de réception, par laquelle il est contrôlé si une valeur d'adresse qui y mémorisée coïncide avec l'adresse ( 240 ) standard et
- dans le cas d'une coïncidence, la valeur d'adresse mémorisée est modifiée en l'adresse ( 1 ) à attribuer.

9. Système ( 100 ) périphérique modulaire suivant la revendication 8, dans lequel en outre il est disposé dans le participant ( 1, ..., 8 ) une unité ( 41 ) d'émission, dans lequel, si une attribution d'adresse est réussie, le participant ( 1, ..., 8 ) produit par l'unité ( 41 ) d'émission un message ( 74 ) de réponse pour le module ( 10 ) de commande et le renvoie au module ( 10 ) de commande, le module ( 10 ) de commande étant conformé de manière à
- envoyer, si le message ( 74 ) de réponse du participant ( 1, ..., 8 ) est positif, la première instruction de commutation au participant ( 1, ..., 8 ), le participant ( 1, ...,8 ) fonctionnant de manière à mettre, par la première instruction de commutation, le premier moyen ( S1 ) de commutation et le deuxième moyen ( S2 ) de commutation dans un état fermé et à mettre le troisième moyen ( S3 ) de commutation dans un état ouvert.

10. Système ( 100 ) périphérique modulaire suivant l'une des revendications 7 à 9, dans lequel il est disposé dans le module ( 10 ) de commande un moyen ( 11 ) de contrôle, qui est conformé pour contrôler la communication des participants par le trajet de communication et pour envoyer aux participants ( 1, ..., 8 ), dans le cas d'une erreur de communication, une instruction de communication de remise à l'état initial pour remettre les participants ( 1, ..., 8 ) dans un état initial.

11. Système ( 100 ) périphérique modulaire suivant l'une des revendications 7 à 10, dans lequel un participant ( 1, ..., 8 ) a un moyen de contrôle de participants pour remettre un participant ( 1, ..., 8 ) individuel à l'état initial.
